# EUROPEAN PATENT APPLICATION

(11) **EP 3 089 353 A1**
(43) Date of publication of application: **02.11.2016**
(21) Application number: 13900249.7
(22) Date of filing: 27.12.2013
(51) Int. Cl.: H02P 9/00

(54) **ROTATING ELECTRICAL MACHINE SYSTEM**

(71) Applicant: Hitachi, Ltd., Chiyoda-ku Tokyo 100-8280 (JP)
(72) Inventor: KUSUNO, Nobuhiro, Tokyo 100-8280 (JP)
(74) Representative: MERH-IP Matias Erny Reichl Hoffmann Patentanwälte PartG mbB
(86) International application number: PCT/JP2013/085036
(87) International publication number: WO 2015/097842

(57) **Abstract**

In order to provide a system which achieves both the suppression of shaft torsional vibration of a rotating electrical system having a large inertia constant and the leveling of a generated power output, a rotating electrical machine system is provided with an input torque estimation device for estimating input torque of a rotation mechanism from the rotation speed of the rotation mechanism, provided with a power converter for controlling a generated power output to be outputted from a generator according to the estimated input torque or a generator output estimated by multiplying the estimated input torque by the rotation speed, provided with a leveled generated power calculation device for, with the estimated generator output as an input, calculating leveled generated power to be outputted to a power system by statistically processing an input over a duration of time corresponding to the number of constituent blades and the rotation speed thereof, and further provided with a direct-current voltage calculation device for calculating, from the calculated leveled generated power and the estimated generator output, a charging voltage command value of an energy storage device such as a smoothing capacitor in a direct-current part of the power converter, and controls the charging voltage of the energy storage device of the power converter connected to the power system in accordance with the calculated voltage.

## Description

### Technical Field

The present invention relates to a rotating electrical machine system.

### Background Art

In recent years, since the interest in energy saving problem or prevention of global warming increases, a power generation system which uses natural energy, such as a wind power generation system or an ocean current power generation system, is widely supplied.

In such a power generation system, kinetic energy of a flowable medium, such as air or seawater is converted into rotational energy by a blade, and by transmitting the rotational energy to a generator via a rotation mechanism, such as a shaft or a speed-increasing gear, the kinetic energy of the flowable medium is converted into electric energy. The generated electric energy is converted into a system frequency of a power system by a power converter, and is outputted to the power system as power.

The flowable medium is a natural object, and therefore, input torque into the power system changes. An example of a problem caused by this includes a changing cycle of the rotation speed of a blade due to a change in the input kinetic energy of the flowable medium, and shaft torsional resonance of the rotation mechanism due to the resonance of the number of mechanical intrinsic vibrations of the rotation mechanism. An example of a method for controlling damage or deterioration of the rotation mechanism by the shaft torsional resonance, includes, for example, the technology described in PTL 1.

Furthermore, examples of a method for controlling the change in the generated power caused by the change in the input kinetic energy of the flowable medium, include the technology described in PTL 2 and the technology described in PTL 3.

### Citation List

### Patent Literature

PTL 1: JP-A-2005-45849
PTL 2: JP-A-2003-134892
PTL 3: JP-A-2011-137393

### Summary of Invention

Technical Problem

In a wind power generation system, there is a tower shadow effect as a factor of a change of kinetic energy of a flowable medium.

As an aspect of installing a blade, there are two types of aspects including an up-wind-type windmill which performs a generating operation as being positioned further on a windward side than a supporting structure member, such as a tower, with respect to the orientation of the wind, and on the contrary, a down-wind-type windmill which performs the generating operation as being positioned further on a leeward side than the supporting structure member, such as the tower, with respect to the orientation of the wind.

An amount of energy converted into rotational energy of the blade from the kinetic energy of the flowable medium relies on a change in the flow speed of flowing into the blade and the flow speed of flowing out of the blade. Both in the up-wind-type and in the down-wind-type, since the flow speed in the vicinity of the supporting structure member, such as the tower, is disturbed by influence of the supporting structure member, the converted rotational energy decreases when the blade passes through the vicinity of the supporting structure member. This is generally called the tower shadow effect.

In particular, in a case of the down-wind-type windmill, since the flow speed disturbed by the supporting structure member, such as the tower, is inputtedted to the blade on an upstream side of the blade, the rotational energy is largely reduced by the effect, and it is known that approximately 5% is reduced in the normal wind speed and approximately 20% is reduced in the strong wind speed.

Since input torque which is inputted to the rotation shaft changes due to the tower shadow effect, shaft torsion or vibration of the rotation mechanism is caused, and the service life of the component which configures the rotation mechanism deteriorates. In addition, since the electric energy outputted from the generator also changes, and since the power outputted to the power system changes, there is a concern that the quality of power deteriorates.

Furthermore, when the blades of a plurality of windmills pass through the vicinity of the support structure member, such as the tower, at substantially the same time, the tower shadow effect of the windmills is synchronized, and a range of change of the total output to the power system increases. In the strong wind speed, the range of change becomes equal to or greater than the range of one windmill in some cases.

Here, an object of the present invention is to provide a rotating electrical machine system which can be employed in one or plural wind power generation systems or ocean current power generation systems, can suppress the shaft torsion caused by the change in the kinetic energy of the flowable medium, such as the wind power or the ocean current, can extend the service life of the component which configures the rotation mechanism, and even in a case where the kinetic energy which becomes the input to the power system changes, can control excessive charge and excessive discharge of an energy storage device of a direct-current portion of the power converter that controls the generator, and can suppress the change in the output power.

### Solution to Problem

In order to solve the above-described problem, for example, a configuration described within a range of the patent claims is employed.

The rotating electrical machine system according to the present invention is a rotating electrical machine system in which a rotation machine rotates and generates power via a rotation mechanism rotated by a blade, including an energy storage device which stores the generated power, in which the power which is made by leveling the generated power over a duration of time corresponding to the number of blades and the rotation speed thereof, is outputted. Advantageous Effects of Invention

According to the present invention, in a single rotating electrical machine system, it is possible to level the generated power output while the service life of the component which configures the rotation mechanism is extended by controlling the shaft torsion.

### Brief Description of Drawings

[Fig. 1] Fig. 1 is a permanent magnet-type rotating electrical machine system.
[Fig. 2] Fig. 2 is a command value calculation logic of the permanent magnet-type rotating electrical machine system.
[Fig. 3] Fig. 3 is a view illustrating a change in time of the calculated command value.
[Fig. 4] Fig. 4 is a command value calculation logic of a case where a power converter which controls a rotation machine performs a torque control.
[Fig. 5] Fig. 5 is a secondary excitation-type rotating electrical machine system.
[Fig. 6] Fig. 6 is a command value calculation logic of the secondary excitation-type rotating electrical machine system.
[Fig. 7] Fig. 7 is a rotating electrical machine system in which the power converter is embedded in a rotor.
[Fig. 8] Fig. 8 is a command value calculation logic of the rotating electrical machine system in which the power converter is embedded in the rotor.
[Fig. 9] Fig. 9 is a rotating electrical machine system according to still another example.
[Fig. 10] Fig. 10 is a schematic view of a down-wind-type windmill.

### Description of Embodiments

Hereinafter, embodiments of a rotating electrical machine system according to the present invention will be described in detail with reference to each drawing. In addition, in each drawing, common parts are given the same reference numerals, and overlapped description will be omitted. The following description is merely an example, and the embodiments of the invention are not limited to the following aspect.

### Example 1

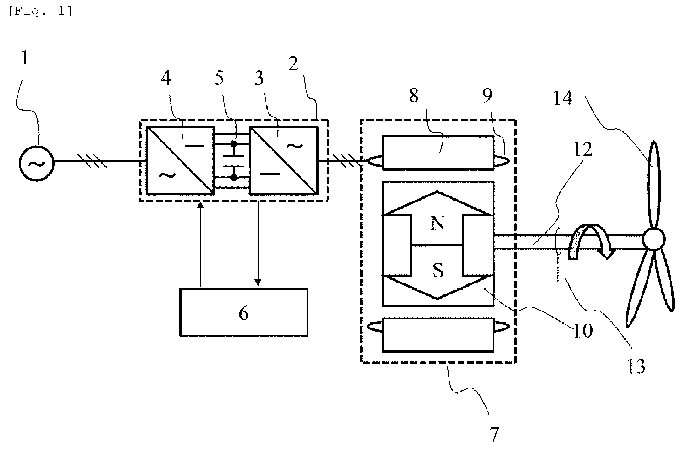

Fig. 1 illustrates the entire configuration of a rotating electrical machine system according to the example. Rotational energy of a blade (14) is transmitted to a rotation machine (7) via a shaft (12) of a rotation mechanism. Although not illustrated in the drawings, the rotational energy may be transmitted to the rotation machine (7) via a speed-increasing gear or a plurality of coupling joints and rotation shafts, and even when the speed-increasing gear or the coupling joint is installed, the effect of the present invention is achieved. As a permanent magnet is embedded in a rotor (10) of the rotation machine (7) and the rotor (10) rotates, alternating-current power which corresponds to a stator winding (9) of a stator (8) of the rotation machine (7) and the rotation speed of the rotor (10) is generated. A forward converter (3) of a power converter (2) is electrically connected to the stator winding (9), and the generated alternating-current power is converted to direct-current power by the forward converter (3). The forward converter (3) is connected to an inverter (4) via a direct-current power storage device, such as a smoothing capacitor (5), and a frequency is converted into a commercial frequency, such as 50 Hz or 60 Hz, by the inverter (4) and is outputted to a power system (1).

Fig. 1 illustrates a case where the rotor (10) of the rotation machine (1) is configured of the permanent magnet, but magnetization may be performed by supplying the direct-current power to the winding, and not being limited thereto, when a rotating electrical machine system which supplies the alternating-current power that relies on the rotation speed of the rotation mechanism generated in the rotation machine to the power system (1) via the power converter (2) is employed, the system can be considered the same as the example.

A control device (6) which controls the power converter (2) controls the current and the voltage between the rotation machine (7) and the power converter (2) so that desired power is generated in accordance with the rotation speed from the rotation machine (7) by the forward converter (3). In addition, the control device (6) which controls the power converter (2) controls the direct-current voltage of the smoothing capacitor (5) to be substantially constant by the inverter (4). Accordingly, the power inputted to the smoothing capacitor (5) by an action of the forward converter (3) is outputted to the power system (1) without being stored in a direct-current portion since the inverter (4) acts to control the direct-current voltage of the smoothing capacitor (5) to be substantially constant. However, in order to make it simple, the above-described operation description does not include a loss according to the operation of the rotation machine (7) or the power converter (2).

In addition, unless otherwise stated, both of the forward converter (3) and the inverter (4) of the power converter (2) in the rotating electrical machine system are configured of alternating-current-to-direct-current converter, and can perform the alternating-current and direct-current power conversion in both directions, one alternating-current-to-direct-current converter (corresponding to the above-described inverter (3)) controls the power of an alternating-current portion according to an effective power command or a torque command, the other alternating-current-to-direct-current converter (corresponding to the above-described forward converter (4)) controls the power of the direct-current portion according to a direct-current portion voltage command value, and any of the alternating-current-to-direct-current converters controls ineffective power of the alternating-current portion as necessary.

Furthermore, since a control method of the effective power, the ineffective power, and the direct-current portion voltage does not influence achievement of the effects of the present invention, the description thereof will be omitted, and hereinafter, a method for computing the efficient power command value or the torque command value with respect to an alternating-current power change with respect to a tower shadow effect, and a method for computing the direct-current portion voltage command value for making the power outputted to the power system substantially constant will be described in detail.

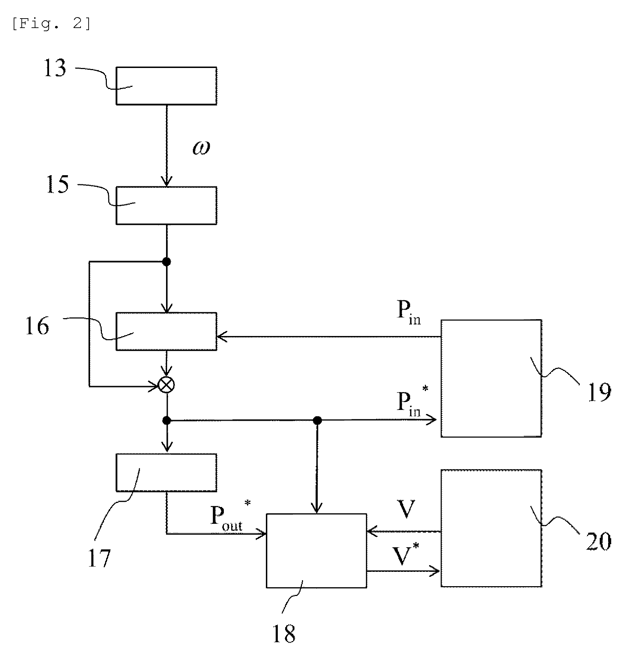

Fig. 2 illustrates a command value calculating block for obtaining the above-described effects of the present invention. A rotation speed (ω) signal from a rotation speed detector (13) is inputted to a low pass filter (15), and removes a changing cycle component which is not caused by the tower shadow effect, such as noise. Accordingly, it is possible to remove the high frequency component by clearance of mechanical processing of a configuration component of the rotation mechanism. However, the low pass filter (15) is not necessary. The rotation speed (ω) signal processed by the low pass filter (15) is inputted to an input torque estimation device (16).

The input torque estimation device (16) computes a rotation speed change rate from the rotation speed (ω) signal and the rotation speed (ω) signal before one sampling. In addition, by dividing a generated power measured value (Pᵢₙ) of the rotation machine obtained by a control device (19) of the power converter which controls the alternating-current side, by the rotation speed (ω) signal, load torque of the rotation machine is computed, and input torque which is inputted to the rotation mechanism is estimated from the rotation number speed change rate, the load torque of the rotation machine, and an inertia constant of a component group which configures the rotation mechanism set in advance. By multiplying the rotation speed (ω) which is filter-processed to the estimated input torque, an efficient power command (Pᵢₙ*) is computed with respect to the power converter which controls the alternating-current side. The efficient power command (Pᵢₙ*) is respectively input to the control device (19) of the power converter which controls the alternating-current side, a leveled generated power calculation device (17) and a direct-current voltage calculation device (18) of the rear end.

The leveled generated power calculation device (15) calculates the leveled generated power outputted to the power system by statistically processing an input over a duration of time corresponding to the number of constituent blades (14) and the rotation speed thereof. For example, in a case where the rotation speed is X [min⁻¹] by three blades, since the tower shadow effect is generated at the time interval of 1/(3X) [min], by performing the consecutive moving time averaging with respect to the input signal (Pᵢₙ) which corresponds to the duration of time, a leveled generated power command value (Pₒᵤₜ*) can be calculated.

In addition, the rotation speed of the blade consecutively changes, and therefore, in order to reduce a calculation load which changes the consecutive moving average duration of time, the movement average duration of time may be fixed to be equal to or greater than the duration of time corresponding to the lower limit of an operation speed range of the rotating electrical machine system. By performing leveling processing calculation in the fixed duration of time which is equal to or greater than the minimum time during which the tower shadow effect is achieved with respect to one blade, without calculating the consecutive duration of time, it is possible to perform the averaging over the duration of time which covers one or more time cycles during which reduction of the inputted torque by the tower shadow effect is generated all the time. In other words, by performing the consecutive moving averaging with respect to the number of fixed input samplings which is equal to or greater than the duration of time which is obtained by converting the time required for the blade to rotate one time per one blade by the lower limit value of the operation speed range of the rotation machine, the leveled generated power command value outputted to the power system is calculated. The calculated leveled generated power command value (Pₒᵤₜ*) is inputted to the direct-current voltage calculation device (18).

Here, it is desirable that the calculated value of the leveled generated power determines a value which is leveled completely, but if the leveling processing is performed to be slightly more uniform than the efficient power command value (Pᵢₙ^{*}) of a calculation source, stabilizing effect of the power outputted to the power system is achieved.

In addition, in the description above, the calculated leveled generated power command value (Pₒᵤₜ*) is calculated based on the efficient power command value (Pᵢₙ*), but instead, the calculation may be performed by using the measured value of the power practically converted by the converter (3) controlled based on the efficient power command value (Pᵢₙ*).

The direct-current voltage calculation device (18) calculates energy to be consecutively charged and discharged by the energy storage device of the direct-current portion, and accordingly, calculates a direct-current voltage command value (V*), from the generated power command value (Pᵢₙ*) obtained in the previous processing, the leveled generated power command value (Pₒᵤₜ*), and the direct-current voltage measured value (V) of the direct-current portion and a constant (capacity of the smoothing capacitor (5) in the example) of the energy storage device of the direct-current portion which are obtained by a control device (20) of the power converter which controls the direct-current side. Specifically, in the direct-current voltage calculation device (18), a difference ΔP between the control cycle generated power command value (Pᵢₙ*) and the leveled generated power command value (Pₒᵤₜ*) is calculated for every moving average duration of time, and using this, the direct-current voltage command value (V*) is calculated. The calculated direct-current voltage command value (V*) is inputted to the control device (20) of the power converter which controls the direct-current side.

According to the description above, the power converter (3) which controls the alternating-current side and the power converter (4) which controls the direct-current side are controlled by the alternating-current side control device (19) and the direct-current side control device (20), respectively, provided in the power converter control device (6), and as the alternating-current control side is operated following the torque change inputted to the rotation mechanism, the power converter (3) and the power converter (4) control shaft torsional vibration by the tower shadow effect, and the input power to the power converter changes by the control. However, as the direct-current control side controls the charge and the discharge with respect to the direct-current portion, the direct-current control side can operate so as to make the output to the power system substantially constant.

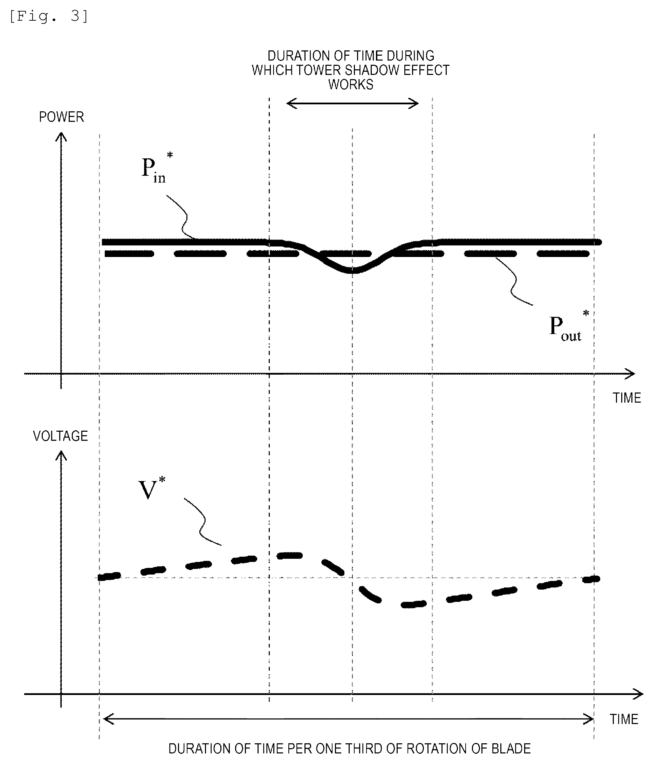

Fig. 3 illustrates a behavior of a calculated value in the above-described control device. As the moving average width is the duration of time including the tower shadow effect, the change of the generated power command value (Pᵢₙ*) is leveled, and the leveled generated power command value (Pₒᵤₜ*) becomes a substantially constant value. Since the direct-current voltage command value energy-stores the difference between the generated power command value (Pᵢₙ*) and the leveled generated power command value (Pₒᵤₜ*) as the voltage of the direct-current portion, the blade behaves odd-symmetrically starting at the timing of crossing the tower structure member.

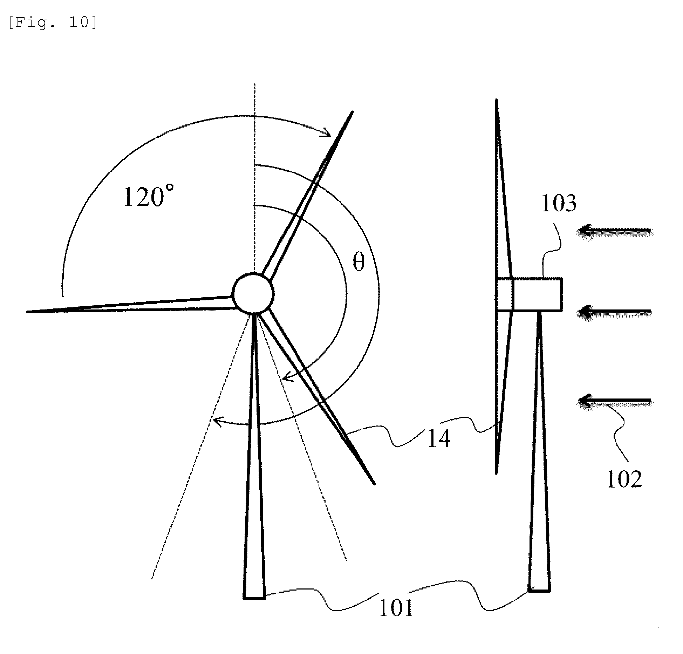

Fig. 10 is a schematic view of a down-wind-type windmill which receives the wind 102 from the side opposite to the blade 14 of the nacelle 103. When the blade 14 passes through the vicinity of a tower 101, the wind received by the blade is interrupted, and the tower shadow effect which deteriorates a lift force occurs. The interruption of the wind occurs not only on the rear side of the tower but also occurs across the periphery thereof. When considering the output change caused by the tower shadow effect, it is necessary to consider the influence of the rotation range having substantially horizontally symmetric width.

The following configuration elements are considered as controllers of a wind power plant having multiple windmills.

• Windmill group control (farm controller): The total output of the windmill group is controlled. Regarding the total output value, the output command value of the power to be outputted to each windmill is calculated from the sum of an output expected value from an anemometer of each windmill, and the output command value of a superior system operator.

• Windmill controller: In order to control the output of an automatic windmill from the output command value from the upper controller (farm controller) and information of the anemometer and an anemoscope at the current moment, the rotation of the windmill or the output is controlled by controlling a windmill nacelle orientation or a blade angle.

Converter controller: The generator is operated according to the given power command.

In the general windmill control, since the output is controlled according to the given power command based on the above-described control stages, the load or the torsion applied to the shaft is not considered. In the example, the effect of suppressing the torsion is obtained by performing the power output control in which the suppression of the shaft torsion is preferred over the command coming from the upper controller.

The influence of the input change by the tower shadow is particularly remarkable by performing the power output control in which the suppression of the shaft torsion is preferred. The power supplied to the power system follows the amount of energy supplied from the blade, after the energy storage device installed in the direct-current portion of the power converter becomes a buffer. In a case where there is a large input change which cannot be absorbed by the buffer, there is a concern that the change is directly outputted to the power system. In addition, in order to manage this, it is necessary that the volume of the energy storage device is large.

In the example, in accordance with the input change which can be expected and occurs periodically, the power command value outputted to the power system is calculated in advance in the most appropriate leveling cycle. The power which is obtained by leveling the power generated by the rotation machine over the duration of time corresponding to the number of the blades and the rotation speed thereof, is outputted to the power system. Accordingly, it is possible to control the influence of the periodic input change, such as the tower shadow. It is desirable that the most appropriate leveling cycle is a multiple of the time which is one third of the rotation cycle that is the period during which the blade rotates one time, for example, in calculation with respect to the tower shadow in wind power generation equipment having three blades.

### Example 2

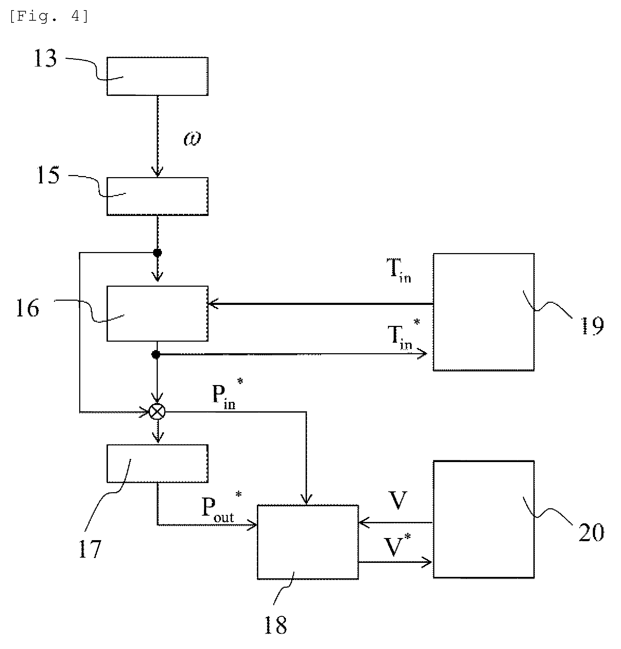

By using Fig. 4, the example will be described. In addition, the description of the parts overlapping the above-described example will be omitted.

Example 1 describes a case where the alternating-current side power converter is operated according to the generated power command (Pᵢₙ*), but in order to directly follow the input torque change of the rotation mechanism, the torque control may be performed instead of the generated power control of the alternating-current side power converter, and the control device (19) of the alternating-current side power converter may input a torque command value (Tᵢₙ*), and may control the load torque of the rotation machine (7). In this case, a control logic of the present invention illustrated in Fig. 2 can be replaced as illustrated in Fig. 4. As a result of the replacement, the measured value which is inputted to the input torque estimation device (16) from the control device (19) of the alternating-current side power converter becomes load torque (Tin) estimated from the electrically measured value. In addition, the torque command value (Tᵢₙ*) which is computed to be a value to suppress the shaft torsion by the input torque estimation device (16) is inputted to the control device (19) of the alternating-current side power converter while maintaining the state thereof.

When performing the torque control, without estimating the load torque, by measuring a torsion displacement amount of the shaft by a shaft torsion sensor, such as light or distortion gauge, it is possible to directly measure a difference between the load torque and the input torque. In this case, the shaft torsion sensor is installed instead of the rotation speed detector (13), and the torque measured value is inputted to the input torque estimation device (16) while maintaining the state thereof.

### Example 3

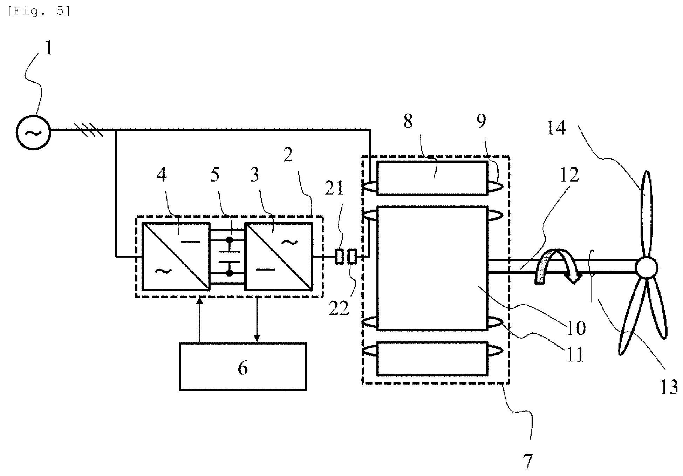

By using Fig. 5, the example will be described. In addition, the description of the parts overlapping the above-described example will be omitted.

As illustrated in Fig. 5, as the stator winding (9) is electrically connected to the power system (1), a rotation magnetic field is generated in the stator relying on the frequency of the power system and the stator winding (9), and the power converter (2) supplies the alternating-current power which corresponds to the difference (which is generally called sliding (s)) between the physical rotation speed of the rotor (10) and the rotation speed of the rotation magnetic field of the stator, to a rotor winding (11) via a brush (21) and a slip ring (22), the present invention can be employed even in a winding-type secondary excitation rotating electrical machine system which generates the power.

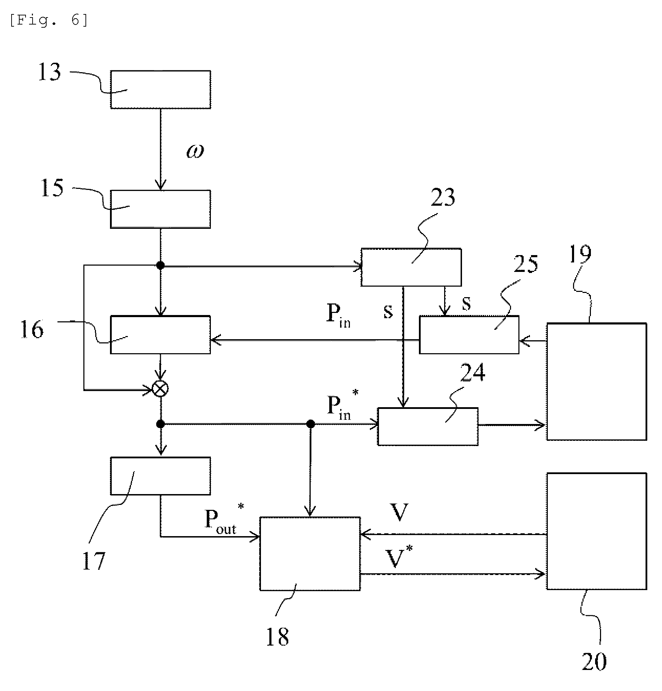

In the winding-type secondary excitation rotating electrical machine system, the input energy inputted to the rotor (10) in accordance with the sliding (s) is uniquely distributed to the stator (8) and the rotor (10), and the direction of giving and receiving the energy is uniquely determined by the sliding (s). Therefore, the power converter (3) which controls the alternating-current side controls the power provided to the rotor winding (10) from the power converter (3) so that the power provided to the power system (1) from the stator winding (9) becomes Pᵢₙ*/(1-s) in accordance with the sliding (s). Therefore, the command value calculating block for obtaining the effect of the present invention illustrated in Fig. 2 is required to be replaced as illustrated in Fig. 6 considering the sliding (s).

The calculating block illustrated in Fig. 6 calculates the sliding (s) from the rotation speed (ω) signal measured by the rotation speed detector (13) by adding a new sliding calculator (23). From a shaft output and the sliding of the rotation machine measured by the control device (19) of the alternating-current side power converter, a shaft output calculator (25) of the rotation machine calculates the generated power (Pᵢₙ), and inputs the generated power (Pᵢₙ) to the input torque estimation device (16). The generated power command value (Pᵢₙ^{*}) which is determined so that the shaft torsion is suppressed is converted to the command value which corresponds to the input to the rotor (10) by a stator output calculator (24) before being inputted to the control device (19) of the alternating-current side power converter.

The direct-current voltage calculation device (18) calculates the direct-current voltage command value (V*) which is sent to the control device (20) of the power converter which controls the direct-current side, from the difference between the generated power command value (Pᵢₙ^{*}) and the leveled generated power command value (Pₒᵤₜ*), but the specific calculating content is slightly different from that of Example 1. In the winding-type secondary excitation rotating electrical machine system, the power supplied to the power system (1) becomes the power to which the power from the stator winding (9) and the power from the power converter (4) that controls the direct-current side are added. As described above, since the power supplied to the power system (1) from the stator winding (9) is Pᵢₙ*/ (1-s), and the total power outputted to the power system (1) is required to be the leveled generated power command value (Pₒᵤₜ*), the direct-current voltage command value (V*) is calculated based on the difference thereof.

### Example 4

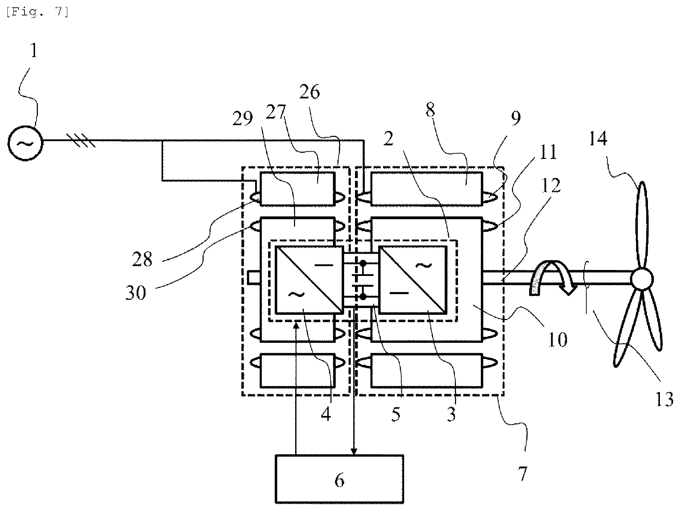

By using Fig. 7, the example will be described. In addition, the description of the parts overlapping the above-described example will be omitted.

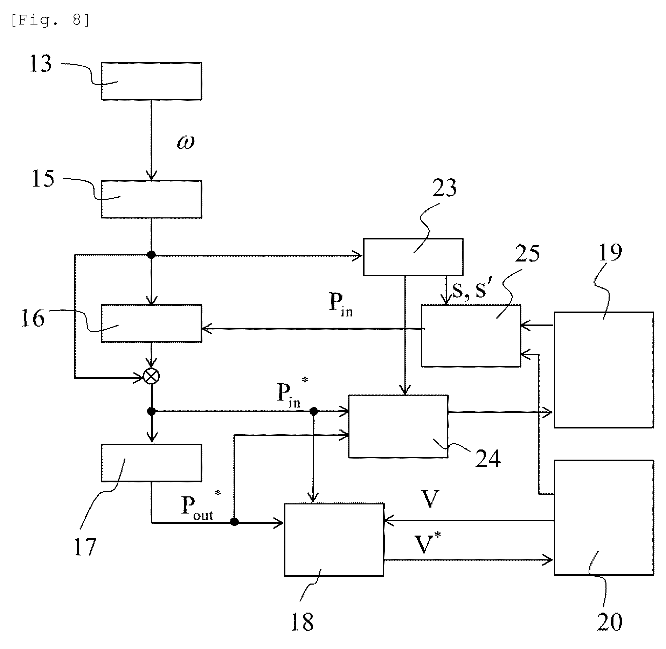

As the rotors of two winding-type secondary excitation rotating electrical machine systems illustrated in Fig. 7 are connected to rotate coaxially, and the power converter (2) is mounted on the rotor, the present invention can also be employed in the rotating electrical machine system which does not require the brush (21) and the slip ring (22) in the winding-type secondary excitation rotating electrical machine system illustrated in Fig. 5. A point that the energy inputted to and outputted from the rotation machine in accordance with the sliding is uniquely determined is similar to that of the winding-type secondary excitation rotating electrical machine system, but there is a case where the numbers of poles of the wincing of the rotation machine (7) and an auxiliary rotation machine (26) are different from each other, and it is necessary to consider each of the sliding (s) of the rotation machine (7) and a sliding (s') of the auxiliary rotation machine (26). In addition, it is necessary to consider a case where each of the rotation machine (7) and the auxiliary rotation machine (26) generates the load torque in the rotation mechanism when estimating the input torque. Therefore, the command value calculating block for obtaining the effect of the present invention illustrated in Fig. 2 is required to be replaced as illustrated in Fig. 8 considering the sliding (s) and the sliding (s').

In Fig. 8, the sliding calculator (23) calculates the sliding (s) and the sliding (s') which respectively correspond to the numbers of poles of the winding of the rotation machines, and inputs the calculated sliding (s) and the sliding (s') into the shaft output calculator (25) and the stator output calculator (24). Since the generated power output of the auxiliary rotation machine is also necessary for estimating the input torque, a generated power output (Pᵢₙ') is inputted to the shaft output calculator (25) from the control device (20) of the power converter which controls the direct-current side. In addition, since it is necessary that the command value to the control device (19) of the alternating-current side power converter cooperates with the command value to the auxiliary rotation machine, the leveled generated power command value (Pₒᵤₜ*) is also input to the stator output calculator (24). Even in the example, the direct-current voltage command value (V*) calculated based on the difference between the generated power command value (Pᵢₙ*) and the leveled generated power command value (Pₒᵤₜ*) is inputted to the control device (20) of the power converter which controls the direct-current side.

### Example 5

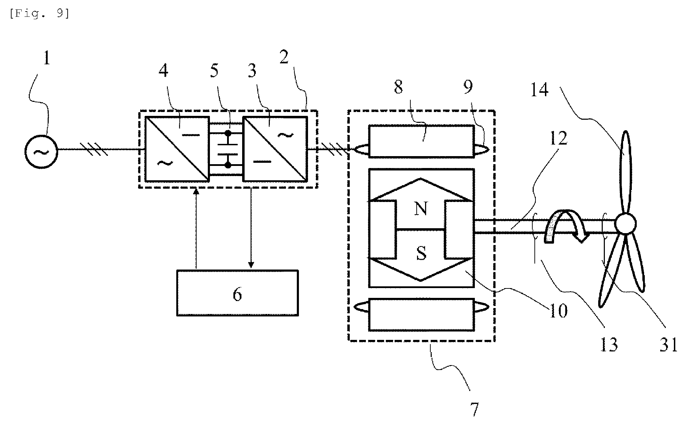

By using Fig. 9, the example will be described. In addition, the description of the parts overlapping the above-described example will be omitted.

Fig. 9 illustrates the entire configuration of the rotating electrical machine system illustrating another embodiment according to the present invention. A rotation speed detector (31) is newly provided on the blade side, in the permanent magnet-type rotating electrical machine system of Fig. 1. Accordingly, by integrating the rotation speed signal detected by each of the rotation speed detector (13) and the blade side rotation speed detector (31), it is possible to ascertain a phase of the shaft rotation of the rotation mechanism at a position where the rotation speed detector is provided. By using the information, it is possible to directly determine the strength and the weakness of the shaft torsion by the difference of the phase of the shaft rotation, and to improve the input torque estimation accuracy based on the difference of the phase of the shaft rotation and a torsion spring constant of the shaft, in the input torque estimation device (16). Furthermore, since it is possible to directly determine the strength and the weakness of the shaft torsion, it is possible to compute the generated power command value (Pᵢₙ*) for controlling the torsion strength to be constant or suppressing the torsion strength within a constant range of change.

Improvement of Examples 1 to 4 described above will be described below. In a case where the number of blades is two or more, since the tower shadow effect is substantially similar in any blade, the input torque change of the tower shadow effect by the preceding blade can be considered the same as the input torque change when the blade crosses the tower structure member for the following blade. Accordingly, by using a partial calculated value by efficiently using a past calculated value at a rotation symmetrical point of the phase of the blade rotation, it is possible to expect the division of the calculating processing and the high speed of the control.

The above-described Examples 1 to 4 relate to the rotating electrical machine system in which the input torque to the generator relies on the natural environment, such as the wind power or the ocean current, and describe a device configuration, such as a control device which is required in the variable control of the load torque outputted to the rotation mechanism as a reaction of the generated power from the rotating electrical machine, and a constant output control of the generated power outputted to the power system, and a detecting device which is required in the control.

As a change managing method 1 other than the above-described examples, for example, a method for controlling the generator to increase the electricity output of the generator by the power converter connected to the generator is employed in a case where the rotation speed of the rotation mechanism increases. Accordingly, since the load torque which becomes a reaction of the input torque of the generator also increases, as a result, it is possible to reduce the rotation speed of the rotation mechanism. In addition, on the contrary, in a case where the rotation speed of the rotation mechanism decreases, the generator is controlled to reduce the electricity output of the generator by the power converter connected to the generator. Accordingly, since the load torque which becomes the reaction of the input torque of the generator also decreases, as a result, it is possible to increase the rotation speed of the rotation mechanism. In this manner, by maintaining the rotation speed of the rotation mechanism to be constant by controlling the load torque in accordance with the increase and the decrease of the speed, the shaft torsional resonance is suppressed.

However, according to the above-described change managing method 1, in order to maintain the rotation speed to be constant all the time in accordance with the increase and the decrease of the rotation speed, in a case where the input torque to the rotation mechanism from the blade increases and the rotation speed of the rotation mechanism increases, the load torque which is reverse to the input torque increases so that the rotation speed decreases. On the contrary, in a case where the input torque to the rotation mechanism from the blade decreases and the rotation speed of the rotation mechanism decreases, in order to decrease the load torque which is reverse to the input torque so that the rotation speed increases, the load torque change which is reverse to the input torque change all the time is added to the rotation mechanism by the tower shadow effect. This corresponds to repeatedly applying the shaft torsion load to the shaft. Therefore, there is a possibility that a problem of accelerating the deterioration of the component of the rotation mechanism occurs.

In addition, as a change managing method 2 other than the examples, for example, there is a method for controlling the change of the generated power to the power system by controlling the charging and the discharging of the power storage device provided in the direct-current portion of the power converter, by temporarily storing the increasing amount of the output of the generator as the charging and discharging power by the power storage device, and by constantly outputting the stored power to the power system, in accordance with the increase and the decrease of the output of the generator.

However, according to the above-described change managing method 2, in order to charge and discharge the energy storage device, such as the smoothing capacitor, of the direct-current portion of the power converter in accordance with the increase and the decrease of the consecutive generator output, in a case where the kinetic energy of the flowable medium, such as the wind power or the ocean current, changes to increase or decrease, when the generated power outputted to the power system is constantly controlled, the excessive charge and the excessive discharge of the energy storage device of the direct-current portion are made, and it is not possible to continue the output control constantly.

In addition, as a change managing method 3 other than the example, for example, there is a method for controlling the blade rotation speed and leveling the total output of the plurality of windmills, by selecting several specific windmills from the windmills and controlling a blade angle (pitch angle) of the selected windmills, in accordance with the operation situation of the plurality of windmills.

However, according to the above-described change managing method 3, in order to level the generated power outputted to the power system, the plurality of windmills are essential, and in addition, since the control device which controls the plurality of windmills and the communicating devices thereof are essential, the costs of the power generating system increase.

In the rotating electrical machine system described in the example of the present invention, by providing a configuration described in the examples for solving the above-described problem, it is possible to provide the rotating electrical machine system which can be employed in a single wind power generating system or an ocean current power generating system, can suppress the shaft torsion caused by the change in the kinetic energy of the flowable medium, such as the wind power or the ocean current, and the tower shadow effect, can extend the service life of the component which configures the rotation mechanism, and, even in a case where the kinetic energy which becomes the input to the power system changes, can level the output power without causing the excessive charge and the excessive discharge of the energy storage device of the direct-current portion of the power converter that controls the generator. Reference Signs List

- 1: power system
- 2: power converter
- 3, 4: (individual) power converter
- 5: direct-current portion smoothing capacitor
- 6: power converter control device
- 7: rotation machine
- 8: stator
- 9: stator winding
- 10: rotor
- 11: rotor winding
- 12: rotation shaft or shaft
- 13: rotation speed detector
- 14: blade (three blades)
- 15: low pass filter
- 16: input torque estimation device
- 17: leveled generated power calculation device
- 18: direct-current voltage calculation device
- 19: alternating-current side control device
- 20: direct-current side control device
- 21: brush
- 22: slip ring
- 23: sliding calculator
- 24: stator output calculator
- 25: shaft output calculator of rotation machine
- 26: auxiliary rotation machine
- 27: stator of auxiliary rotation machine
- 28: stator winding of auxiliary rotation machine
- 29: rotor of auxiliary rotation machine
- 30: rotor winding of auxiliary rotation machine
- 31: blade side rotation speed detector
- ω: rotation speed
- Pᵢₙ: generated power of rotation machine, measured value
- Pᵢₙ*: generated power command value
- Pₒᵤₜ*: leveled generated power command value
- V: direct-current voltage measured value
- V*: direct-current voltage command value
- Tᵢₙ: Torque measured value of rotation machine or calculated value in control device
- Tᵢₙ*: torque command value
- s: sliding of rotation machine
- s': sliding of auxiliary rotation machine

## Claims

1. A rotating electrical machine system in which a rotation machine rotates and generates power via a rotation mechanism rotated by a blade, comprising:
an energy storage device which stores the generated power,
wherein the power which is obtained by leveling the generated power over a duration of time corresponding to the number of the blades and the rotation speed thereof is outputted.

2. The rotating electrical machine system according to claim 1, further comprising:
a first converter which converts the power generated by the rotation machine from alternating-current to direct-current, and stores the converted power in the energy storage device;
a second converter which converts the power stored in the energy storage device from the direct-current to the alternating-current, and outputs the converted power to a power system;
a rotation speed detector which is provided in the rotation machine; and
a control device which determines an output command value of the first converter based on a change rate of the rotation speed detected by the rotation speed detector.

3. The rotating electrical machine system according to claim 1, further comprising:
a first converter which converts the power generated by the rotation machine from the alternating-current to the direct-current, and stores the converted power in the energy storage device;
a second converter which converts the power stored in the energy storage device from the direct-current to the alternating-current, and outputs the converted power to a power system; and
a control device which computes a command value to the second converter based on a value which is obtained by leveling the output command value to the first converter over a duration of time determined based on the number of blades and the rotation speed thereof.

4. The rotating electrical machine system according to claim 2, further comprising:
a control device which controls the power converted by the first converter to follow a change in input torque added to the rotation mechanism by the blade.

5. A rotating electrical machine system in which a rotation machine rotates via a rotation mechanism rotated by a blade, comprising:
a rotation speed detector in a rotation shaft of at least one of the blade, the rotation mechanism, or the rotation machine;
an input torque estimation device which estimates input torque of the rotation mechanism from a difference of a rotation speed detected value detected by the rotation speed detector, or from a rotation speed change rate computed by using the rotation speed detected value;
an alternating-current side control device of a power converter which controls a generated power output outputted from the rotation machine, based on the estimated input torque, or based on a generated power output estimated by multiplying the rotation speed and the estimated input torque;
a leveled generated power calculation device which calculates the generated power outputted to the power system by leveling the input over a duration of time corresponding to the number of the blades and the rotation speed thereof, by considering the estimated generated power output as the input;
a direct-current voltage calculation device which calculates a charging voltage command value of an energy storage device installed in a direct-current portion of the power converter, from the calculated leveled generated power and the estimated generator output; and
a direct-current side control device of the power converter which controls a charging voltage of the energy storage device of the power converter based on the calculated charging voltage command value.

6. The rotating electrical machine system according to claim 5, further comprising:
a first rotation speed detector in the rotation shaft of the rotation machine; and
a second rotation speed detector in the rotation shaft of the blade, or in the rotation shaft of a speed-increasing gear of the rotation mechanism,
wherein rotation speed signals detected by each of the rotation speed detectors are integrated, a phase of a rotation angle of a position at which the rotation speed detector is provided is computed, and shaft torsion from the computed phase of the rotation angle, or a torque command value which corrects the shaft torsion, are computed.

7. The rotating electrical machine system according to any one of claims 1 to 6, further comprising:
a control device which performs a consecutive moving average with respect to the power generated by the rotation machine over a duration of time corresponding to the number of blades and the rotation speed thereof, and calculates a generated power command value outputted to the power system.

8. The rotating electrical machine system according to any one of claims 1 to 6,
wherein the duration of time is a fixed duration of time which is equal to or greater than the time obtained by converting the time required for the blade to rotate one time per one blade, in the rotation speed of a lower limit value of an operating speed range of the rotation machine.

9. The rotating electrical machine system according to any one of claims 1 to 7, comprising:
a supporting structure object of the blade on an upstream side of the blade.

10. The rotating electrical machine system according to any one of Claims 1 to 8, comprising: a control device which controls the command value for a following blade by using the calculated value for a preceding blade.

11. An operating method of a wind power generation equipment including three blades; a rotation machine which is driven by the blade and generates power; and a power converter which converts the power generated by the rotation machine and supplies the converted power to a system, and which is provided with a smoothing capacitor,
wherein the power outputted to the power system is smoothed by a time unit of a multiple of one third of a rotation cycle of the blade.
